# EUROPEAN PATENT APPLICATION

(11) **EP 4 488 715 A1**
(43) Date of publication of application: **08.01.2025**
(21) Application number: 23763736.8
(22) Date of filing: 03.03.2023
(51) Int. Cl.: G01S 7/497, G01S 17/89, G01S 17/894

(54) **CALIBRATION METHOD AND APPARATUS FOR 3D SENSING DEVICE**

(30) Priority: 04.03.2022 KR 20220028229
(71) Applicant: LG INNOTEK CO., LTD., Seoul 07796 (KR)
(72) Inventor: PARK, Sang Hyung, Seoul 07796 (KR); KIM, Bum Jin, Seoul 07796 (KR)
(74) Representative: Plasseraud IP
(86) International application number: PCT/KR2023/002930
(87) International publication number: WO 2023/167538

(57) **Abstract**

A calibration method for a 3D sensing device comprising an optical output unit and an optical receiving unit according to an embodiment of the present invention comprises the steps of: performing a first calibration on a two-dimensional image using a first target board; and performing a second calibration for a distance using a second target board, wherein a distance between the 3D sensing device and the first target board and a distance between the 3D sensing device and the second target board are each set shorter than a minimum measurable distance of the 3D sensing device.

## Description

### [Technical Field]

Embodiments of the present invention relate to calibration, and more specifically, to a calibration method and apparatus for a 3D sensing device.

### [Background Art]

Location recognition techniques are established as an essential technique in various fields such as vehicles, robots, games, artificial intelligence, and the like. As a representative example of a 3D sensing device used in the location recognition techniques, there is a LiDAR device. The LiDAR device emits a laser pulse and calculates a distance to an object using the time required for the laser pulse to return after being reflected from the object.

Generally, LiDAR devices may be divided into short-range LiDAR devices for measuring a distance from a few centimeters to several meters and long-range LiDAR devices for measuring a distance from tens of meters to hundreds of meters.

The LiDAR device may comprise an optical output unit including a light source, and an optical receiving unit including a sensor. In the assembly process of the LiDAR device, distortion may occur due to misalignment of internal parts or structural problems between the optical output unit and the optical receiving unit in the LiDAR device. Accordingly, a calibration work for correcting the distortion after assembly is essential in the process of manufacturing the LiDAR device.

The calibration work may be performed using a target chart and a calibration apparatus arranged within a recognizable distance of the LiDAR device.

In the case of a long-range LiDAR device, as a space of tens to hundreds of meters is required for the calibration work, there is a problem of low production unit per hour (UPH).

### [Disclosure]

### [Technical Problem]

An object of the present invention is to provide a calibration method and apparatus for a 3D sensor device.

### [Technical Solution]

A calibration method for a 3D sensing device including an optical output unit and an optical receiving unit according to an embodiment of the present invention comprises the steps of: performing a first calibration on a two-dimensional image using a first target board; and performing a second calibration on a distance using a second target board, wherein each of a distance between the 3D sensing device and the first target board and a distance between the 3D sensing device and the second target board is set to be shorter than a minimum measurable distance of the 3D sensing device.

Each of the distance between the 3D sensing device and the first target board and the distance between the 3D sensing device and the second target board may be set to be less than 1/2 of the minimum measurable distance of the 3D sensing device.

Light output from a light source, reflected by the first target board, and input into the optical receiving unit of the 3D sensing device may be used at the step of performing a first calibration, and a wavelength of the light output from the light source may be included in a range of a wavelength of light output from the optical output unit included in the 3D sensing device.

The light source may be arranged on the same plane as the optical output unit included in the 3D sensing device, and an angle of view of the light output from the light source may be larger than an angle of view of the light output from the optical output unit.

Light output from the optical output unit of the 3D sensing device, passing through an optical member, reflected by the second target board, and input into the optical receiving unit of the 3D sensing device may be used at the step of performing a second calibration, and the optical member may be arranged on an optical path between the optical output unit and the second target board.

The optical member may include at least one among a collimator, a mirror, and a prism.

The 3D sensing device may be LiDAR.

A calibration apparatus for a 3D sensing device including an optical output unit and an optical receiving unit according to an embodiment of the present invention comprises: a first calibration unit including a first computing unit for performing a first calibration on a two-dimensional image using a first target board; and a second calibration unit including a second computing unit for performing a second calibration on a distance using a second target board, wherein each of a distance between the 3D sensing device and the first target board and a distance between the 3D sensing device and the second target board is set to be shorter than a minimum measurable distance of the 3D sensing device.

The first calibration unit may further include a light source, wherein a wavelength of the light output from the light source may be included in a range of a wavelength of light output from the optical output unit included in the 3D sensing device.

An angle of view of the light output from the light source may be larger than an angle of view of the light output from the optical output unit.

The second calibration unit may further include an optical member arranged on the optical path between the optical output unit and the second target board.

The optical member may include at least one among a collimator, a mirror, and a prism.

### [Advantageous Effects]

According to an embodiment of the present invention, since a LiDAR device can be calibrated even within a distance shorter than a recognizable distance of the LiDAR device, the UPH of the LiDAR device can be increased.

### [Description of Drawings]

FIG. 1 is a view illustrating a LiDAR device and its distance recognition principle according to an embodiment of the present invention.
FIG. 2 is a block diagram showing a calibration apparatus according to an embodiment of the present invention.
FIG. 3 is a flowchart illustrating a calibration method of a calibration apparatus according to an embodiment of the present invention.
FIG. 4 is a conceptual view showing a first calibration.
FIG. 5 is a conceptual view showing a second calibration.
FIG. 6 is a view showing an example of a target board applied to a calibration method according to an embodiment of the present invention.
FIG. 7 is a conceptual view showing a first calibration unit of a calibration apparatus according to another embodiment of the present invention.
FIG. 8 is a view illustrating a simulation method using a calibration apparatus according to an embodiment of the present invention.

### [Mode for Invention]

Hereinafter, preferred embodiments of the present invention will be described in detail with reference to the accompanying drawings.

However, the technical spirit of the present invention is not limited to some of the described embodiments, but may be implemented in various different forms, and one or more of the components may be selectively combined or replaced among the embodiments without departing from the scope of the technical spirit of the present invention.

In addition, unless explicitly and specifically defined and described, terms (including technical and scientific terms) used in the embodiments of the present invention may be interpreted as a meaning that can be generally understood by those skilled in the art, and commonly used terms, such as terms defined in a dictionary, may be interpreted considering the contextual meaning of related techniques.

In addition, the terms used in the embodiments of the present invention are for describing the embodiments and are not intended to limit the present invention.

In this specification, singular forms may also include plural forms unless specifically stated in the phrase, and when it is described as "at least one (or more) among A, B, and C," it may include one or more of all combinations that can be combined using A, B, and C.

In addition, in describing the components of the embodiments of the present invention, terms such as first, second, A, B, (a), and (b) may be used.

These terms are used only to distinguish one component from other components, and the essence, sequence, or order of the components are not limited by the terms.

In addition, when a component is described as being 'connected', 'coupled' or 'combined' to another component, it may also include the cases where the component is 'connected', 'coupled', or 'combined' by still another component arranged between the component and another component, as well as the cases where the component is directly coupled, connected, or combined to another component.

In addition, when it is described as being formed or arranged "on (above)" or "under (below)" each component, it may also include the cases where one or more other components are formed or arranged between two components, as well as the cases where two components are directly in contact with each other. In addition, when it is expressed as "on (above) or under (below)", it may also include the downward direction, as well as the upward direction, from the viewpoint of one component.

Hereinafter, although the embodiments will be described in detail with reference to the accompanying drawings, identical or corresponding components will be assigned with the same reference numerals regardless of reference symbols, and duplicate descriptions thereof will be omitted.

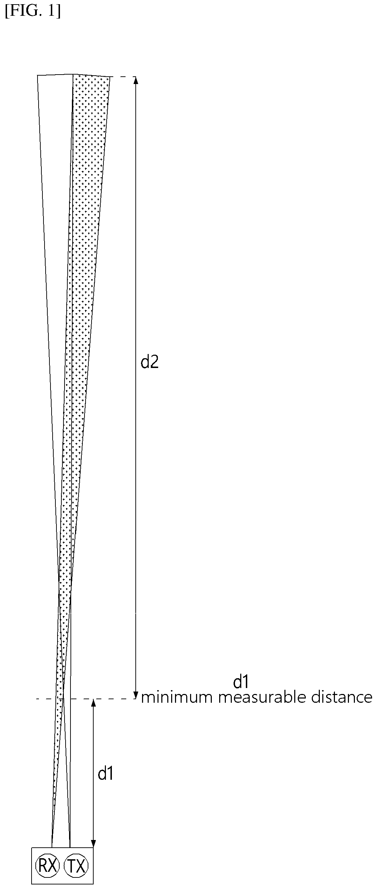

FIG. 1 is a view illustrating a LiDAR device and its distance recognition principle according to an embodiment of the present invention.

Referring to FIG. 1, a LiDAR (Light Detection and Ranging) device 10 includes an optical output unit Tx and an optical receiving unit Rx, and includes a control unit (not shown) and a distance calculation unit (not shown).

The optical output unit Tx of the LiDAR device 10 radiates light to an object, the optical receiving unit Rx receives light that returns after being reflected from the object, and the distance calculation unit (not shown) calculates the distance between the LiDAR device 10 and the object using the time taken to receive the light after radiation. The control unit (not shown) generally controls the LiDAR device 10. At least one among the control unit (not shown) and the distance calculation unit (not shown) may be arranged in the same space as the optical output unit Tx and the optical receiving unit Rx or may be arranged in a separate space.

The optical output unit Tx generates an output optical signal and radiates the optical signal to an object. The output optical signal may include optical pulses generated at regular intervals. To this end, the optical output unit Tx may include a light source and a lens assembly.

The light generated by the light source may be an infrared ray with a wavelength of 770 to 3000 nm, preferably 800 to 1000 nm, more preferably 850 nm to 940 nm, and to this end, the light source may include a laser diode (LD) or a vertical cavity surface emitting laser (VCSEL). The light source repeats blinking (on/off) at regular time intervals to generate an output optical signal in the form of a pulse wave or continuous wave, and the regular time interval may be the frequency of the output optical signal.

The lens assembly may collect light output from the light source and output the collected light to the outside. The lens assembly may be arranged on the top of the light source to be spaced apart from the light source. Here, the top of the light source may mean the side where light is output from the light source. The lens assembly may include at least one lens. When the lens assembly includes a plurality of lenses, each lens may be aligned around the central axis to form an optical system. Here, the central axis may be the same as the optical axis of the optical system.

The optical receiving unit Tx may include a lens assembly and a light receiving sensor. The light receiving sensor may receive infrared rays that have passed through the lens assembly after being reflected from an object.

The recognizable distance of the LiDAR device 10 may vary according to the angle of view of the optical output unit Tx. For example, as the light reflected from an object after being radiated from the optical output unit Tx may not be received by the optical receiving Rx within a first distance d1, objects existing within the first distance d1 may not be recognized by the LiDAR device 10. On the contrary, as the light reflected from an object after being radiated from the optical output unit Tx can be received by the light receiver Rx within a second distance d2, objects existing within the second distance d2 can be recognized by the LiDAR device 10.

Meanwhile, in the assembly process of the LiDAR device 10, distortion may occur due to misalignment of internal parts or structural problems between the optical output unit and the optical receiving unit in the LiDAR device. Accordingly, a calibration work for correcting the distortion after assembly is essential in the process of manufacturing the LiDAR device 10.

The calibration work may be performed using a target board and a calibration apparatus arranged within the recognizable distance of the LiDAR device 10.

In the case of a long-range LiDAR device, as a space of tens to hundreds of meters is required for the calibration work, there is a problem of low production unit per hour (UPH).

According to an embodiment of the present invention, it is intended to efficiently calibrate the LiDAR device within a distance shorter than the recognizable distance of the LiDAR device.

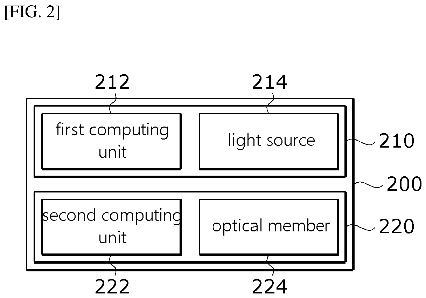

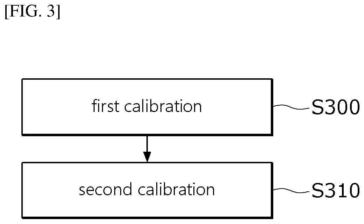

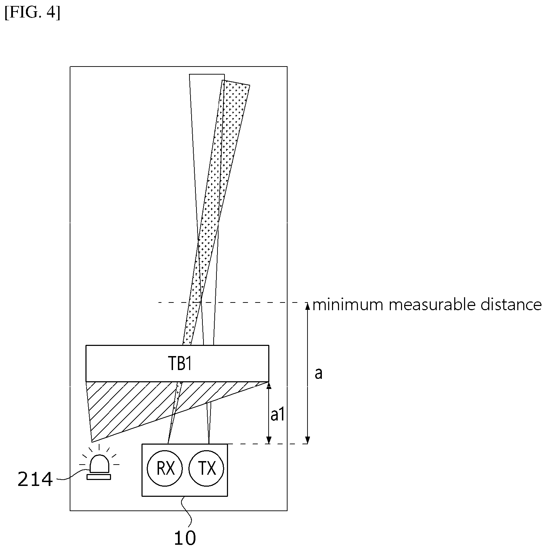

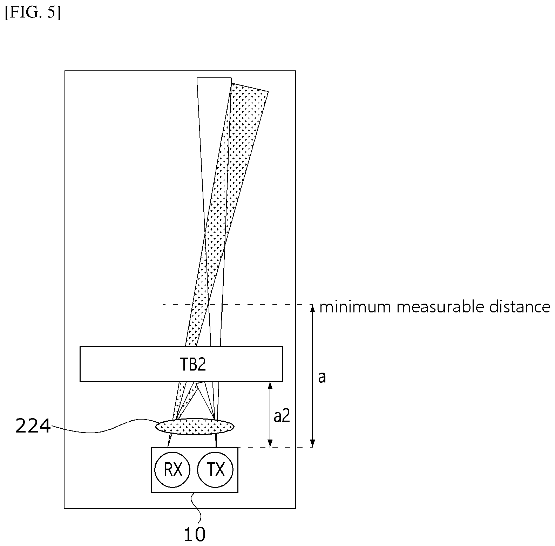

FIG. 2 is a block diagram showing a calibration apparatus according to an embodiment of the present invention, FIG. 3 is a flowchart illustrating a calibration method of a calibration apparatus according to an embodiment of the present invention, FIG. 4 is a conceptual view showing a first calibration, and FIG. 5 is a conceptual view showing a second calibration.

Referring to FIGS. 2 and 3, a first calibration unit 210 of a calibration apparatus 200 performs a first calibration on a two-dimensional image using a first target board (S300), and a second calibration unit 220 of the calibration apparatus 200 performs a second calibration on a distance using a second target board (S310).

Here, the first calibration on a two-dimensional image means calibration for the X coordinate, Y coordinate, and yaw value on a two-dimensional plane facing the LiDAR device 10, and the second calibration on a distance means calibration for the Z coordinate, pitch value, and roll value perpendicular to the two-dimensional plane. Here, calibration for the X coordinate, Y coordinate, Z coordinate, yaw value, pitch value, and roll value means software calibration, and known software calibration techniques may be applied.

According to an embodiment of the present invention, the space for calibration can be minimized by separately performing the first calibration on the two-dimensional image and the second calibration on the distance.

Referring to FIGS. 1 to 5, the first calibration unit 210 includes a first computing unit 212. Here, the first computing unit 212 calculates the X coordinate, Y coordinate, and yaw value on the two-dimensional plane facing the LiDAR device 10. According to an embodiment of the present invention, in order to perform the first calibration at step S300, a first target board TB1 is arranged within the minimum measurable distance a of the LiDAR device 10. That is, the distance a1 between the LiDAR device 10 and the first target board TB 1 is set to be shorter than the minimum measurable distance a of the LiDAR device 10. For example, the distance a1 between the LiDAR device 10 and the first target board TB 1 may be set to be less than 1/2 of the minimum measurable distance a of the LiDAR device 10. For example, even in the case of a long-range LiDAR device with a minimum measurable distance of several meters, the distance between the LiDAR device 10 and the first target board TB 1 may be set to be less than several tens of centimeters.

When the distance between the LiDAR device 10 and the first target board TB 1 is shorter than the minimum measurable distance of the LiDAR device 10, the light output from the optical output unit Tx of the LiDAR device 10 may not be received by the optical receiving unit Rx after being reflected from the first target board TB 1. Meanwhile, since calibration on the Z coordinate, i.e., the distance between the LiDAR device 10 and the first target board TB1, is not performed at the step of performing the first calibration (S300), the light received by the optical receiving unit Rx of the LiDAR device 10 does not necessarily need to be the light output from the optical output unit Tx.

Accordingly, the first calibration unit 210 may further include a light source 214. That is, according to an embodiment of the present invention, at the step of performing the first calibration, the light output from the light source 214 included in the first calibration unit 210 of the calibration apparatus 200, reflected by the first target board TB1, and input into the optical receiving unit Rx of the LiDAR device 10 may be used. At this point, the angle of view of the light source 214 may be set to irradiate at least a partial area, preferably the entire area, of the first target board TB1. According to this, although the distance between the LiDAR device 10 and the first target board TB1 is less than the minimum measurable distance of the LiDAR device 10, calibration on the two-dimensional image is possible. At this point, the wavelength of the light output from the light source 214 may be included in the range of the wavelength of the light output from the optical output unit Tx included in the LiDAR device 10. For example, the wavelength of the light output from the light source 214 may be the same as the wavelength of the light output from the optical output unit Tx included in the LiDAR device 10. According to this, the light output from the light source 214 included in the first calibration unit 210 of the calibration apparatus 200 and reflected by the first target board TB1 may be sensed by the optical receiving unit Rx of the LiDAR device 10.

For example, the light source 214 included in the first calibration unit 210 is arranged on the same plane as the optical output unit Tx of the LiDAR device 10, and the angle of view of the light output from the light source 214 included in the first calibration unit 210 may be larger than the angle of view of the light output from the optical output unit Tx of the LiDAR device 10. According to this, although the distance between the LiDAR device 10 and the first target board TB1 is less than the minimum measurable distance of the LiDAR device 10, as the optical receiving unit Rx of the LiDAR device 10 may receive the light reflected from the first target board TB1, calibration on the two-dimensional image is possible.

Meanwhile, the second calibration unit 220 includes a second computing unit 222. Here, the second computing unit 222 calculates the distance perpendicular to the two-dimensional plane facing the LiDAR device 10, i.e., the Z coordinate, pitch value, and roll value. According to an embodiment of the present invention, in order to perform the second calibration at step S310, a second target board TB2 is arranged within the minimum measurable distance a of the LiDAR device 10. That is, the distance a2 between the LiDAR device 10 and the second target board TB2 is set to be shorter than the minimum measurable distance of the LiDAR device 10. For example, the distance a2 between the LiDAR device 10 and the second target board TB2 may be set to be less than 1/2 of the minimum measurable distance of the LiDAR device 10. For example, even in the case of a long-range LiDAR device with a minimum measurable distance of several meters, the distance between the LiDAR device 10 and the second target board TB2 may be set to be less than several tens of centimeters.

When the distance between the LiDAR device 10 and the second target board TB2 is shorter than the minimum measurable distance of the LiDAR device 10, the light output from the optical output unit Tx of the LiDAR device 10 may not be received by the optical receiving unit Rx after being reflected from the second target board TB2. Meanwhile, since calibration on the Z coordinate, i.e., the distance between the LiDAR device 10 and the first target board TB 1, is performed at the step of performing the second calibration (S310), the light received by the optical receiving unit Rx of the LiDAR device 10 should be the light output from the optical output unit Tx.

To this end, the second calibration unit 220 may further include an optical member 224, and the optical member 224 may be arranged on the optical path between the LiDAR device 10 and the second target board TB2. For example, the optical member 224 may include at least one among a collimator, a mirror, and a prism. The optical member 224 may be arranged on the front side of the optical output unit Tx of the LiDAR device 10 to change the path of the light output from the optical output unit Tx, or may be arranged on the front side of the optical output unit Tx and the optical receiving unit Rx of the LiDAR device 10 to change the path of at least one among the light output from the optical output unit Tx and the light received by the optical receiving unit Rx. That is, according to an embodiment of the present invention, at the step of performing the second calibration, the light output from the optical output unit Tx of the LiDAR device 10, passing through the optical member 224, reflected by the second target board TB2, and input into the optical receiving unit Rx of the LiDAR device 10 may be used. According to this, although the distance between the LiDAR device 10 and the second target board TB2 is less than the minimum measurable distance of the LiDAR device 10, as the light reflected by the second target board TB2 after being output from the optical output unit Tx of the LiDAR device 10 may be received by the optical receiving unit Rx of the LiDAR device 10 due to the change in the optical path by the optical member 224, calibration on the distance is possible.

As described above, when calibration on the two-dimensional image and calibration on the distance are separately performed, precise calibration is possible while minimizing the space and time required for calibration.

Although the first target board TB1 and the second target board TB2 are described as separate target boards, they are not limited thereto, and the first target board TB1 and the second target board TB2 may be the same target board.

As described above, according to an embodiment of the present invention, the distance between the LiDAR device and the target board may be set to be shorter than the minimum measurable distance of the LiDAR device. According to this, the area of the target board may be reduced compared to a case where the target board is arranged farther than the minimum measurable distance of the LiDAR device. When the area of the target board is reduced, the tact time required to scan the target board once can be reduced, and the total time required for calibration can be reduced accordingly.

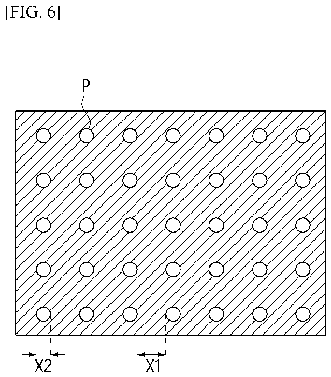

FIG. 6 is a view showing an example of a target board applied to a calibration method according to an embodiment of the present invention. At least one among the first target board TB1 and the second target board TB2 according to an embodiment of the present invention may be the target board according to the embodiment of FIG. 6.

Referring to FIG. 6, the target board may include array-shaped dot patterns P arranged to be spaced apart from each other at predetermined intervals, and the dot patterns may be brighter than the background. The space X1 between the dot patterns may be larger than the diameter X2 of one dot pattern. For example, the space X1 between the dot patterns may be 2 times or more, preferably 2 times or more and 10 times or less, and more preferably 2.5 times or more and 5 times or less of the diameter X2 of one dot pattern. According to this, as it only needs to scan the dot patterns in the target board in calibrating a two-dimensional image or calibrating a distance, compared to a target board such as a checker board or the like, the tact time required to scan the target board once can be reduced, and thus the total time required for calibration can be reduced.

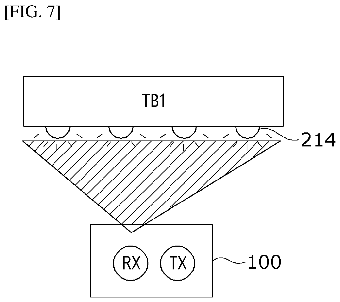

FIG. 7 is a conceptual view showing a first calibration unit of a calibration apparatus according to another embodiment of the present invention.

Referring to FIG. 7, the light source 214 of the first calibration unit 210 may be arranged on the first target board TB 1. For example, when the first target board TB 1 is the target board shown in FIG. 6, the light source 214 may be arranged at at least some of the positions of the dot patterns. According to this, the light output from the light source 214 of the first calibration unit 214 may be received by the optical receiving unit Rx of the LiDAR device 10, and accordingly, although the first target board TB1 is arranged within the minimum measurable distance of the LiDAR device 10, calibration on the two-dimensional image is possible.

At this point, the light source 214 arranged on the first target board TB1 may be a plurality of light sources, and the plurality of light sources may be arranged to be spaced apart from each other at regular intervals. According to this, the light radiated from the first target board TB 1 to the light receiver Rx may have a uniform light distribution.

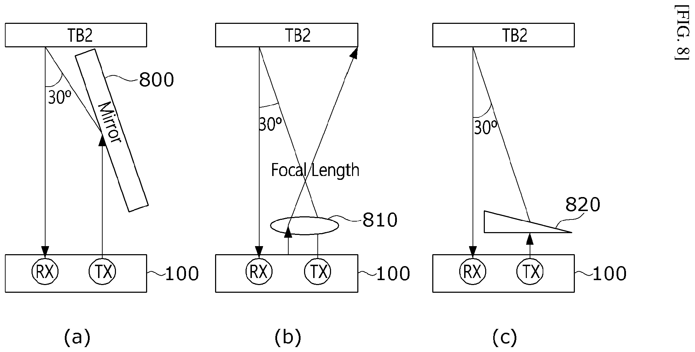

FIG. 8 is a view illustrating a simulation method using a calibration apparatus according to an embodiment of the present invention.

FIG. 8(a) shows Example 1 of changing the path of the light output from the optical output unit Tx of the LiDAR device 10 by arranging a mirror 800 on the optical path of the LiDAR device 10, FIG. 8(b) shows Example 2 of changing the path of the light output from the optical output unit Tx of the LiDAR device 10 by arranging a collimator 810 on the optical path of the LiDAR device 10, and FIG. 8(c) shows Example 3 of changing the path of the light output from the optical output unit Tx of the LiDAR device 10 by arranging a prism 820 on the optical path of the LiDAR device 10.

In all the Examples 1 to 3, the reflection angle with respect to the second target board is set to 30°, and the seating error generated when seating the LiDAR device 10 on the calibration apparatus is set to be in a range of -1 mm to +1 mm. In Example 1, the tilt angle of the mirror 800 is set to 75°, in Example 2, the distance between the collimator 810 and the second target board is set to 3 m, and the focal length is set to 0.5 m, and in Example 3, the prism angle is set to 30° and the refraction angle is set to 30°.

According to Examples 1 to 3, although a predetermined refraction error occurs when the light output from the optical output unit Tx passes through the optical members 800, 810, and 820, the reception error at the optical input unit Rx is appeared to be within an allowed range. According to this, it can be seen that calibration is possible although the seating error generated when seating the LiDAR device 10 on the calibration apparatus is within the range of -1 mm to +1 mm.

The term '-unit' used in this embodiment means software or hardware components such as field-programmable gate array (FPGA) or ASIC, and the '-unit' performs predetermined functions. However, the '-unit' is not a meaning limited to software or hardware. The '-unit' may be configured to reside in an addressable storage medium and may be configured to regenerate on one or more processors. Accordingly, for example, the '-unit' may include software components, object-oriented software components, components such as class components and task components, processors, functions, properties, procedures, subroutines, segments of program code, drivers, firmware, microcode, circuits, data, databases, data structures, tables, arrays, and variables. Functions provided in the components and '-units' may be combined into a smaller number of components and '-units' or may be further separated into additional components and '-units'. In addition, the components and '-units' may be implemented to regenerate one or more CPUs within a device or a secure multimedia card.

Although the present invention has been described above with reference to preferred embodiments, those skilled in the art will understand that various modifications and changes can be made to the present invention without departing from the spirit and scope of the present invention as described below in the claims.

## Claims

1. A calibration method for a 3D sensing device including an optical output unit and an optical receiving unit, the calibration method comprising the steps of:
performing a first calibration on a two-dimensional image using a first target board; and
performing a second calibration on a distance using a second target board, wherein
each of a distance between the 3D sensing device and the first target board and a distance between the 3D sensing device and the second target board is set to be shorter than a minimum measurable distance of the 3D sensing device.

2. The calibration method according to claim 1, wherein each of the distance between the 3D sensing device and the first target board and the distance between the 3D sensing device and the second target board is set to be less than 1/2 of the minimum measurable distance of the 3D sensing device.

3. The calibration method according to claim 1, wherein the step of performing the first calibration uses light output from a light source, reflected by the first target board, and input into the optical receiving unit of the 3D sensing device, wherein a wavelength of the light output from the light source is included in a range of a wavelength of light output from the optical output unit included in the 3D sensing device.

4. The calibration method according to claim 3, wherein the light source is arranged on the same plane as the optical output unit included in the 3D sensing device, and an angle of view of the light output from the light source is larger than an angle of view of the light output from the optical output unit.

5. The calibration method according to claim 1, wherein the step of performing the second calibration uses light output from the optical output unit of the 3D sensing device, passing through an optical member, reflected by the second target board, and input into the optical receiving unit of the 3D sensing device, wherein the optical member is arranged on an optical path between the optical output unit and the second target board.

6. The calibration method according to claim 5, wherein the optical member includes at least one among a collimator, a mirror, and a prism.

7. The calibration method according to claim 1, wherein the 3D sensing device is LiDAR.

8. A calibration apparatus for a 3D sensing device including an optical output unit and an optical receiving unit, the calibration apparatus comprising:
a first calibration unit including a first computing unit for performing a first calibration on a two-dimensional image using a first target board; and
a second calibration unit including a second computing unit for performing a second calibration on a distance using a second target board, wherein
each of a distance between the 3D sensing device and the first target board and a distance between the 3D sensing device and the second target board is set to be shorter than a minimum measurable distance of the 3D sensing device.

9. The calibration apparatus according to claim 8, wherein the first calibration unit further includes a light source, wherein a wavelength of the light output from the light source is included in a range of a wavelength of light output from the optical output unit included in the 3D sensing device.

10. The calibration apparatus according to claim 9, wherein an angle of view of the light output from the light source is larger than an angle of view of the light output from the optical output unit.
